# EUROPEAN PATENT APPLICATION

(11) **EP 1 191 092 A1**
(43) Date of publication of application: **27.03.2002**
(21) Application number: 00120841.2
(22) Date of filing: 25.09.2000
(51) Int. Cl.: C11D 3/00, C11D 17/00, C11D 3/20, C11D 3/10, C11D 3/02, C11D 1/62, C11D 3/50, B01J 13/02

(54) **Granulated composition**

(71) Applicant: Givaudan SA, 1214 Vernier-Genève (CH)
(72) Inventor: Hart, Gerald Leslie, Surbiton, Surrey, KT5 8BD (GB); Naish, Guy Edward, Narborough, Leicester, LE9 5DD (GB)
(74) Representative: Patentanwälte Schaad, Balass, Menzl & Partner AG

(57) **Abstract**

A cleansing product with an outstanding in-use performance comprising an excellent distribution of a detergent as well as an intensive fresh odor is provided by a product comprising a granulated composition. Said granulated composition comprises an effervescent component consisting of a core material and a protecting outer layer characterized in that the outer protecting layer is the hydrated core material.

## Description

The present invention relates to a granulated composition comprising an effervescent component consisting of a core material and a protecting outer layer and to the method for preparing such a composition.

Various cleansing products for use in toilet are known. Such cleansing products typically contain a surfactant for cleaning, often oxidizing agents, binders, dye and fragrances. Market research has shown that consumers are dissatisfied with the apparent effectiveness of current toilet cleansing products. Such products should be very effective and should not include materials which are environmentally unacceptable or have an unpleasant smell. Therefore the consumer is seeking a product with a dramatic point of difference to existing products.

Effervescent compositions are widely used in medicine. Due to the fact that such compositions are sensitive to moisture in the atmosphere a secondary packing comprising a binder is normally used to prevent the liberation of carbon dioxide by moist air (US 5,593,693).

EP 0 045 894 describes a process for producing a cocoa powder mix characterized in that immediately before agglomeration cocoa aroma is sprayed onto a powder which is not sensitive to moisture, after which the powder is agglomerated using steam or water and then dried. EP 11 807 describes the preparation of water dispersible or soluble granulates by spraying agitated powder with steam and drying the product.

It is an object of the present invention to provide a cleansing product with an outstanding in-use performance comprising an excellent distribution of a detergent as well as an intensive fresh odor.

This object is achieved by means of a composition which has the features of claim 1. Surprisingly it was found that the desired performance can be provided by a granulated composition comprising an effervescent component consisting of a core material and a protecting outer layer characterized in that the outer protecting layer is the hydrated core material. This outer protecting layer has a preferred thickness of 5 to 10 micron. Due to this outer protecting layer the core is protected against moist air and therefore a long shelf life is guaranteed.

A composition according to the present invention comprises a component which effervesces in the presence of an aqueous acidic solution, an acidic substance and a detergent. In a preferred embodiment a composition according to the present invention comprises additionally a biocide and/or a fragrance and/or a drying agent. In a most preferred embodiment a composition according to the present invention comprises a dye and/or abrasive substance and/or starchy material. When added to water the acid dissolves to give an aqueous acid environment which hydrolyzes the effervescent component which results in its decomposition to liberate carbon dioxide. The bubbles formed are stabilized by the detergent. Together with the carbon dioxide the fragrance is liberated which results in a nice, fresh smell.

As effervescent component, a variety of substances can be utilized. To mention a few examples, alkali metal carbonates (e.g. sodium bicarbonate, sodium sequicarbonate, potassium bicarbonate, etc.) alkali metal hydrogen carbonates (e.g. sodium hydrogen carbonate, potassium hydrogen carbonate, etc.) and ammonium carbonate can be employed. These effervescent components can be used singly or in combination. Most preferred effervescent components are sodium carbonate and sodium hydrogen carbonate. The proportion of effervescent component can be selected from the range of 10-90% by weight.

The effervescent component mentioned above is normally used in combination with an auxiliary component - an acidic substance, typically including a variety of organic acids, typically hydroxy carboxylic acids such as citric acid, tartaric acid, malic acid, lactic acid, gluconic acid, etc. saturated aliphatic carboxylic acids such as acetic acid, oxalic acid, malonic acid, succinic acid glutaric acid, adipic acid etc. and unsaturated aliphatic carboxylic acid such as fumaric acid. Said acids can be used in their protonated form or as a salt thereof. These acidic substances can also be used singly or in combination. Most preferred is citric acid. The concentration of said acid is generally in the range of 5 to 70% by weight.

Various known fragrances are added depending on the type of aroma which is to be imparted. The fragrance which can be of an type suitable for use in household cleaners can be included at any level between 0.1% to 10% with a preferred inclusion level of 0.25% to 5% by weight.

Various detergents are useful in conjunction with the present invention. These cleaning agents are typically solids selected from nonionic, anionic, cationic, or amphoteric surfactants but preferably with good foaming characteristics such as sodium lauryl sulphate, linear alkyl benzene sulphonates, and alkyl trimethylammonium halides. Most preferred are detergents which are cationic surface active agents such as quaternary ammonium based surfactants and preferably an alkyl trimethyl ammonium halides. The preferred execution combines the properties of a foaming agent with a biocide. One example of such a cleaning agent is a quaternary ammonium based surfactant, preferably alkyl trimethyl ammonium halide. Such a cationic surface active agent can be included at any level between 0.5 to 30%. The preferred inclusion level is between 1 to 5% by weight.

Biocides may be included separately and their selection would be obvious to those skilled in the art, and more specifically may be chosen from the following: selected dialkyl quaternary ammonium compounds, alkyl dimethyl benzyl ammonium compounds, or alkyl dimethyl substituted benzyl ammonium compounds.

A hygroscopic substance also called a drying agent is added to assist in the prevention of a caking and of the liberation of free hydrogen ions. This is to maintain a free flowing powder before agglomeration. Preferred substances include anhydrous magnesium sulfate, anhydrous magnesium chloride and anhydrous calcium chloride and are present at concentration of 1 to 20% by weight.

A dye or colorant is also preferably included at concentrations up to 0 to 0.3% by weight. The amount of coloring agents or dyes to be dispensed into the water will depend on the color intensity desired and the cost of the dye. The choice of the coloring agent will largely depend on the color desired for the water into which the powder is to be dispensed. A preferred coloring agent is FD & C Blue 1.

Optionally a mild abrasive substance can be added as well at a concentration of up to 80% by weight to facilitate a cleaning by cleansing device. Said abrasive substance is selected of the group of alkali metal carbonate, silicate or any other substance that is commonly used as an abrasive media but does not result in the generation of noxious gases, such as sulphor dioxide, on contact with water. A preferred abrasive is calcium carbonate.

Further starchy material at a level of 0 to 5% by weight may be introduced to enhance the agglomeration of the powder under influence of humidity.

It was found that when the composition according to the present invention is agglomerated using steam. Surprisingly the moist air is not able to penetrate further. Therefore the core of said powder is protected against liberation of carbon dioxide and therefore also against lost of fragrance. Consequently it is not necessary anymore to protect such an effervescent powder by another layer comprising a binder.

The granulated composition according to the present invention consisting of a core material and a protecting outer layer is prepared by mixing and optionally milling the starting materials, fluidizing the resulting mixture in a fluidized bed with a water containing gas thereby forming the granulated composition with the hydrated layer of the core material. For that all starting materials are free of water and are all solids with the exception of the fragrance. The combination is a powder. A gas, preferably atomized water is introduced at temperatures from ambient up to 100°C in the process after fluidizing the initial powder. The amount of water added in the fluidized bed is approximately 0.2 to 0.5%. Once the aggregation of particles reaches the desired average size of 0.5 to 5 mm, preferably 2 mm, then the introduction of atomized water is terminated and dry air introduced to remove excess humidity. Any apparatus providing a fluidized bed and a means to introduce atomized water can be used to carry out this process.

The powder of the present invention may be used as household and industrial products for a variety of cleaning purposes such as cleaning hard surfaces. Said powders are particularly suitable in the cleaning of inclined surfaces including toilet bowls, basins and lavatories.

The following examples illustrate compositions according to the present invention. The exemplified compositions are illustrative only and do not limit the scope of the invention.

### Examples

### Example 1:

This example illustrate a typical composition before granulation has taken place.

| Material | % Weight / Weight |
|---|---|
| Sodium bicarbonate | 10-90 |
| Citric acid anhydrous | 5-40 |
| Magnesium sulphate Anhydrous | 1-20 |
| Alkyl trimethylammonium halide | 0.5-30 |
| Fragrance | q.v. |
| Calcium carbonate | 0-80 |
| Dye | 0-3 |

### Example 2:

This example illustrate a composition in a preferred embodiment before granulation has taken place.

| Material | % Weight / Weight |
|---|---|
| Sodium bicarbonate | 38 |
| Citric acid anhydrous | 30 |
| Magnesium sulphate anhydrous | 7 |
| Cetyl trimethylammonium bromide | 2 |
| Fragrance | 1 |
| Calcium carbonate | 22 |
| FD&C blue No1 dye | 0.0001 |

### Example 3:

This example illustrate a composition in a preferred embodiment before granulation has taken place.

| Material | % Weight / Weight |
|---|---|
| Sodium bicarbonate | 30 |
| Citric acid anhydrous | 20 |
| Magnesium sulphate anhydrous | 3 |
| Sodium lauryl sulphate (100% AD) | 2 |
| Proprietary biocide | 0.1 |
| Fragrance | 1 |
| Calcium carbonate | 43.9 |
| FD&C blue No1 dye | 0.0001 |

### Example 4:

### Method of Manufacture

The ingredients according to examples 1 to 3 are mixed and are milled to form a homogenous powder. This powder is fed into the fluidised bed. The volume of air passing into the fluidised bed, the relative humidity at commencement, and the volume of dry air needed to stabilise the agglomerated powder would be obvious to one skilled in the art.

## Claims

1. Granulated composition comprising an effervescent component consisting of a core material and a protecting outer layer **characterized in that** the protecting outer layer is a hydrated core material.

2. Granulated composition according to claim 1 **characterized in that** the protecting outer layer has a thickness of 5 to 10 micron.

3. Granulated composition according to any of the preceding claims having a particle size of 0.5 to 2 mm.

4. Granulated composition according to any of the preceding claims the core material comprising an acidic substance and a detergent.

5. Granulated composition according to any of the preceding claims comprising a fragrance as ingredient.

6. Granulated composition according to any of the preceding claims comprising a drying agent as ingredient.

7. Granulated composition according to any of the preceding claims comprising a dye and/or an abrasive substance and/or a starch material as ingredients.

8. Granulated composition according to any of the preceding claims comprising 10 to 90% by weight of the effervescent component.

9. Granulated composition according to any of the preceding claims comprising 5 to 70% by weight of the acidic substance.

10. Granulated composition according to any of the preceding claims comprising 0.5 to 30% by weight of the detergent.

11. Granulated composition according to any of the preceding claims comprising up to 10% by weight of the fragrance.

12. Granulated composition according to any of the preceding claims comprising up to 20% by weight of the drying agent.

13. Granulated composition according to any of the preceding claims comprising up to 0.3% by weight of the dye.

14. Granulated composition according to any of the preceding claims comprising up to 80% by weight of the abrasive substance.

15. Granulated composition according to any of the preceding claims comprising up to 5% by weight of the starch material.

16. Granulated composition according to any of the preceding claims wherein the effervescent component is selected of the group of sodium bicarbonate, sodium sequicarbonate, potassium bicarbonate or potassium carbonate.

17. Granulated composition according to any of the preceding claims, wherein the acidic substance is selected of the group of citric acid, oxalic acid, malonic acid, succinic acid, adipic acid or the corresponding salt of said acid.

18. Granulated composition according to any of the preceding claims, wherein the detergent is a quaternary ammonium based surfactant, preferably an alkyl trimethyl ammonium halide.

19. Granulated composition according to any of the preceding claims, wherein the drying agent is selected of the group of anhydrous magnesium sulfate, anhydrous magnesium chloride and anhydrous calcium chloride.

20. Granulated composition according to any of the preceding claims wherein the abrasive substance is selected of the group of alkali metal carbonate or silicate.

21. Household products comprising a granulated composition according to any of the preceding claims.

22. Industrial products comprising a granulated composition according to any of the preceding claims.

23. A method for preparing a granulated composition consisting of a core material and a protecting outer layer by mixing the starting materials, fluidizing the resulting mixture in a fluidized bed with a water containing gas thereby forming the granulated composition with the hydrated layer of the core material.

24. A method according to claim 22 wherein the water containing gas the water is atomized.
